Europäisches Patentamt

European Patent Office

Office européen des brevets

(11) Veröffentlichungsnummer: **0 370 372 B1**

## (12) EUROPÄISCHE PATENTSCHRIFT

(45) Veröffentlichungstag der Patentschrift: **16.03.94**

(21) Anmeldenummer: **89121117.9**

(22) Anmeldetag: **15.11.89**

(51) Int. Cl.⁵: **C08F 4/655**, C08F 10/00

(54) Verfahren zur kontinuierlichen Herstellung von Katalysatoren für die Niederdruckpolymerisation von Olefinen.

(30) Priorität: **25.11.88 DE 3839813**

(43) Veröffentlichungstag der Anmeldung:
**30.05.90 Patentblatt 90/22**

(45) Bekanntmachung des Hinweises auf die
Patenterteilung:
**16.03.94 Patentblatt 94/11**

(84) Benannte Vertragsstaaten:
**AT BE DE ES FR GB IT NL SE**

(56) Entgegenhaltungen:
**FR-A- 73 574**
**GB-A- 1 051 074**
**GB-A- 1 155 478**

(73) Patentinhaber: **HOECHST AKTIENGESELL-SCHAFT**

**D-65926 Frankfurt(DE)**

(72) Erfinder: **Prött, Ernst, Dr. Dipl.-Chem.**
**Vennstrasse 2**
**D-4200 Oberhausen 11(DE)**
Erfinder: **Payer, Wolfgang, Dr. Dipl.-Chem.**
**Zedernweg 58**
**D-4230 Wesel 1(DE)**
Erfinder: **Walter, Jutta, Dr. Dipl.-Chem.**
**Etzoldstrasse 32**
**D-4133 Neukirchen-Vluyn(DE)**
Erfinder: **Materne, Winfried, Dipl.-Ing.**
**Osterfelder Strasse 26**
**D-5802 Wetter 4(DE)**
Erfinder: **Onallah, Maher, Dipl.-Ing.**
**Franzstrasse 8**
**D-4200 Oberhausen 11(DE)**

EP 0 370 372 B1

**EP 0 370 372 B1**

**Beschreibung**

Die Erfindung betrifft ein Verfahren zur Herstellung von Katalysatoren für die Niederdruckpolymerisation von alpha-Olefinen.

Es ist bekannt, alpha-Olefine nach dem Ziegler-Niederdruckverfahren zu polymerisieren. Als Katalysatoren verwendet man Verbindungen der Elemente der IV. bis VI. Nebengruppe des Periodensystems in Mischung mit metallorganischen Verbindungen der I. bis III. Gruppe des Periodensystems. Unter den Verbindungen der Elemente der IV. bis VI. Nebengruppe haben Titanverbindungen die größte Bedeutung erlangt. Häufigste Anwendung als metallorganische Verbindungen der I. bis III. Gruppe finden Aluminiumalkyle und -alkylhalogenide.

Zumeist stellt man die Ziegler-Katalysatoren durch Reduktion von Ti(IV)-Verbindungen wie Titantetrachlorid oder Titansäureester mit aluminiumorganischen Verbindungen her. Man erhält dabei Ti(III)-Verbindungen, die häufig isoliert, in einem geeigneten Medium suspendiert und mit dem für die Polymerisation erforderlichen Aktivator versetzt werden.

Die Herstellung der Katalysatoren erfolgt üblicherweise diskontinuierlich in Rührkesseln. Im allgemeinen legt man die metallorganische Verbindung gelöst in einem inerten Lösungsmittel z.B. einem Kohlenwasserstoff oder einem Kohlenwasserstoffgemisch vor und setzt unter Rühren eine Lösung der Verbindung des Nebengruppenelements zu. So gibt man nach einem in der DE 15 95 666 B2 beschriebenen Verfahren (Vergleichsversuch C) zu einer Lösung von Ethylaluminiumsesquichlorid in n-Heptan eine Lösung von Dichlordiisopropyltitanester in Cyclohexan, läßt bei 20°C unter Rühren 6 Stunden nachreagieren, wäscht den entstandenen Titanisopropoxychlorid-Niederschlag aus und verwendet ihn zur Polymerisation. Entsprechend ist z.B. bei Einsatz von $TiCl_4$ als Verbindung des Nebengruppenelements $TiCl_3$ das Reaktionsprodukt der Umsetzung mit der metallorganischen Verbindung. Es wird isoliert, erneut suspendiert und mit dem für die Polymerisation erforderlichen Aktivator versetzt.

Die mittlere Korngröße und die Korngrößenverteilung der so gewonnenen katalytisch aktiven Verbindung, die auch maßgebend für Korngröße und Korngrößenverteilung des Polymerisats sind, können durch Variation der Konzentrationen der in Lösung vorliegenden Reaktionspartner, der Art des Reduktionsmittels, durch die Reaktionstemperatur und die Wahl des inerten Lösungsmittels gesteuert werden. Eine weitere Möglichkeit das Kornspektrum zu beeinflussen ist der Zusatz von Elektronendonoren zu der als Reduktionsmittel verwendeten metallorganischen Verbindung. Er führt zu feinkörnigen Polymerisaten, die überdies eine enge Korngrößenverteilung aufweisen. Als Elektronendonoren können nach dem Verfahren der DE 19 26 940 A1 Wasser oder Alkohole, nach dem Verfahren der DE 19 26 941 A1 sekundäre Phosphite eingesetzt werden.

Die mittlere Korngröße und die Korngrößenverteilung der Polymerteilchen sind für die Verwendung der Polymerisate wesentliche Eigenschaften. So werden z.B. für die Verarbeitung von hochmolekularem Polyethylen, die durch Kaltpressen von Pulver mit anschließendem Schmelzsintern oder durch Extrusion erfolgt, relativ kleine Korngrößen verlangt. Für die Extrusions- oder Spritzgußverarbeitung von niedermolekularen Polyethylenpulvern bevorzugt man dagegen grobkörniges Material das keine Feinanteile besitzt.

Obgleich also, wie vorstehend beschrieben wurde, eine Reihe von Möglichkeiten zur Steuerung der Korngröße und der Korngrößenverteilung besteht, führt die Herstellung der Polymerisationskatalysatoren in Rührkesseln nicht immer zu zufriedenstellenden Ergebnissen. So können im Hinblick auf die Weiterverarbeitung der Polymerisate nicht in allen Fällen Elektronendonoren als Zusatzstoffe eingesetzt werden. Auch die Beeinflussung der Kornmorphologie, die entscheidenden Einfluß auf die Polymerisateigenschaften wie Schüttdichte und Korngrößenverteilung nimmt, durch Änderung der Konzentrationen der Reaktionspartner in den zur Umsetzung bestimmten Lösungen, sind Grenzen gesetzt. Mit abnehmender Konzentration der Ausgangskomponenten werden die Reaktoren immer größer oder, bei unverändertem Reaktorvolumen, die Ansätze immer kleiner, so daß die Katalysatorvorratshaltung zu Problemen führt. Überdies ist bei der Umsetzung in Rührkesseln eine gleichmäßige Ausbildung der Katalysatorpartikel wegen der sich durch Zugabe der Reaktanten ständig verändernden Konzentrationsverhältnisse und der unterschiedlichen Verweildauer des Reaktionsproduktes im Reaktionsgemisch, nicht gewährleistet. Daraus resultiert u.a. eine unbefriedigende Katalysatoraktivität.

Es bestand daher die Aufgabe ein Verfahren zur Herstellung von Katalysatoren für die Niederdruckpolymerisation von alpha-Olefinen zu entwickeln, das sich nicht nur kontinuierlich durchführen läßt, sondern auch die beschriebenen Nachteile vermeidet.

Die Erfindung besteht in einem Verfahren zur kontinuierlichen Herstellung von Katalysatoren aus einer Ti(III)-Verbindung und einer organischen Aluminiumverbindung für die Niederdruckpolymerisation von alpha-Olefinen. Es ist dadurch gekennzeichnet, daß man eine Ti(III)-Verbindung verwendet, die durch Reduktion einer Ti(IV)-Verbindung mit einer organischen Aluminiumverbindung in einem Homogenisator erhalten

2

wurde.

Das neue Verfahren erlaubt es, die Ti(III)-Komponente des Polymerisationskatalysators nicht nur kontinuierlich, sondern auch mit reproduzierbarer Korngröße und Korngrößenverteilung herzustellen.

Erfindungsgemäß erfolgt die Reduktion der Ti(IV)-Verbindung in einem Homogenisator als Reaktor. Hierzu werden üblicherweise Lösungen der Ausgangsstoffe - Ti(IV)-Verbindung und organische Aluminiumverbindung - dem Homogenisator getrennt zugeführt. Das Reduktionsprodukt, die Ti(III)-Verbindung, wird üblicherweise als nicht löslicher Feststoff abgeschieden und im Augenblick der Bildung der mechanischen Einwirkung des Homogenisators unterworfen. Dadurch gelingt es, die Größe der Ti(III)-Teilchen zu steuern und zu begrenzen. Unterstützt wird diese mechanische Behandlung durch Reduzierung der Verweilzeit des Reaktionsproduktes im Reaktor. Sie führt zu einer einheitlicheren Korngrößenverteilung bzw. einem gleichmäßigeren Kristallwachstum.

Unter dem Begriff Homogenisatoren im Sinne der vorliegenden Erfindung versteht man Vorrichtungen, bei denen die zur Homogenisierung erforderliche Energie in ein kleines Volumen eingebracht wird. Infolge des örtlich hohen Energieeintrags entstehen ausgeprägte Scherspannungsfelder, in denen Teilchen kontrollierter Dimension erzeugt werden. Beispiele für derartige Homogenisatoren sind Mischpumpen und Strahlmischer. Besonders bewährt haben sich die mit Rotor-Stator-Systemen arbeitenden Kreiselhomogenisatoren. Bei ihnen werden die Feststoffpartikel einer intensiven Prall- und Reibbeanspruchung mit Kavitation unterworfen. Direkt nach der Behandlung wird üblicherweise das Bearbeitungsgut aus der Maschine entlassen.

Die Reaktion der Ti(IV)-Verbindung mit der organischen Aluminiumverbindung erfolgt üblicherweise in einem inerten Lösungsmittel bei Temperaturen von -20 bis 50 °C, vorzugsweise 0 bis 20 °C. Die Konzentrationen der Reaktanten in den Ausgangslösungen betragen 50 bis 3000, insbesondere 100 bis 1500 mmol/l. Es können Lösungen gleicher oder unterschiedlicher Konzentration verwendet werden. Je Mol Titanverbindung setzt man üblicherweise 0,3 bis 2,0, vorzugsweise 0,4 bis 1,0 mol Aluminiumverbindung ein.

Als Ti(IV)-Verbindungen eignen sich die Chloride und Bromide sowie Verbindungen der allgemeinen Formel $Ti(OR)_{4-n}X_n$, wobei n 1 bis 3 ist, R gleiche oder verschiedene Kohlenwasserstoffreste, insbesondere Alkylreste mit 1 bis 18, vorzugsweise 2 bis 8 Kohlenstoffatomen und X Chlor oder Brom bedeuten. Als Beispiele seien $TiCl_4$, $TiBr_4$, $Ti(OC_2H_5)Cl_3$, $Ti(OC_5H_7)Cl_3$, $Ti(Oi-C_4H_9)Cl_3$ genannt.

Organische Aluminiumverbindungen, die erfindungsgemäß zur Reduktion der Ti(IV)-Verbindungen eingesetzt werden können, entsprechen der allgemeinen Formel $AlR_{3-n}X_n$ mit n 0, 1 oder 2; R steht für gleiche oder verschiedene Alkylreste mit 1 bis 12, insbesondere 2 bis 6 Kohlenstoffatomen; X ist Chlor oder Brom. Beispiele für solche Verbindungen sind Triethylaluminium, Triisobutylaluminium, Diethylaluminiumchlorid und Ethylaluminiumdichlorid. Geeignet sind auch polymere Aluminiumorganyle die durch Umsetzung von Lithiumaluminiumhydrid oder Aluminiumtrialkylen oder Aluminiumdialkylhydriden, deren Alkylreste jeweils 1 bis 16 Kohlenstoffatome besitzen, mit $C_4$ - bis $C_{20}$-Diolefinen, insbesondere $C_4$ - bis $C_{12}$-Diolefinen erhalten werden. Vorzugsweise werden die Umsetzungsprodukte von $Al(i-C_4H_9)_3$ oder $Al(i-C_4H_9)_2H$ mit Isopren ("Isoprenylaluminium") eingesetzt. Die Aluminiumverbindungen können in reiner Form oder auch als Gemisch aus zwei oder mehr Verbindungen verwendet werden.

Als Lösungmittel für die Ti(IV)- und die organischen Aluminiumverbindungen gelangen inerte Kohlenwasserstoffe zur Anwendung. Bevorzugt werden gesättigte, aliphatische Kohlenwasserstoffe oder Gemische von Kohlenwasserstoffen mit 6 bis 14 Kohlenstoffatomen im Molekül.

Die den Homogenisator verlassende Dispersion der Ti(III)-Verbindung kann unmittelbar nach Zugabe des Aktivators zur Olefinpolymerisation eingesetzt werden. Üblicherweise wird jedoch die Ti(III)-Verbindung isoliert und mit einem inerten Dispersionsmittel gewaschen.

Die Aktivierung des Ti-Katalysators erfolgt zweckmäßig durch die gleichen organischen Aluminiumverbindungen, die zur Reduktion der Ti(IV)-Verbindung verwendet wurden. Wie bei der Reduktion können die Aluminiumverbindungen in reiner Form oder als Gemische benutzt werden, vorzugsweise setzt man als Aktivator Aluminiumisoprenyl ein.

Der aluminiumorganische Aktivator wird üblicherweise in Konzentrationen von 0,1 bis 5,0 mmol, vorzugsweise 1 bis 3 mmol/l Verdünnungsmittel bzw. Reaktorvolumen verwendet, während die Ti-Komponente in Konzentrationen von 0,05 bis 0,5 mmol/l Verdünnungsmittel oder Reaktorvolumen eingesetzt wird.

Die Polymerisation kann in Lösung, in Suspension oder in der Gasphase, in einer oder in zwei Stufen, kontinuierlich oder diskontinuierlich, bei Temperaturen von 20 bis 250 °C, vorzugsweise 60 bis 100 °C, durchgeführt werden. Die Drücke liegen unterhalb 2,0 MPa, vorzugsweise bei 0,15 bis 0,8 MPa.

Für die Lösung- und Suspensionspolymerisation eignen sich die für das Ziegler-Niederdruckverfahren gebräuchlichen inerten Verdünnungsmittel, wie aliphatische oder cycloaliphatische Kohlenwasserstoffe; als Beispiele seien Butan, Pentan, Hexan, Cyclohexan genannt. Weiterhin können aromatische Kohlenwasserstoffe, wie Benzol, Xylol benutzt werden oder auch Benzin- bzw. hydrierte Dieselölfraktionen, die sorgfältig von Sauerstoff, Schwefelverbindungen und Feuchtigkeit befreit worden sind. Schließlich sind auch aromatische oder aliphatische Halogenkohlenwasserstoffe brauchbar.

Im Falle einer Suspensionspolymerisation besteht die Aufarbeitung lediglich darin, daß man den Feststoff unter Inertgas vom Dispergiermittel abtrennt und trocknet. Bei Ausschluß von Luft und Feuchtigkeit kann das Dispergiermittel ohne jegliche Zwischenbehandlung zur Polymerisation wieder verwendet werden.

Als Monomere werden Ethylen oder Mischungen von Ethylen mit bis zu 10 Gew.-%, insbesondere bis zu 5 Gew.-%, alpha-Olefinen mit 3 bis 16 Kohlenstoffatomen eingesetzt. Vorzugsweise wird Ethylen mit alpha-Olefinen der Formel $R-CH=CH_2$ copolymerisiert, wobei R einen verzweigten oder unverzweigten Kohlenwasserstoffrest, insbesondere einen geradkettigen oder verzweigten, substituierten oder unsubstituierten Alkylrest mit 1 bis 8 Kohlenstoffatomen bedeutet. Propylen, Buten-(1), Penten-(1), 4-Methylpenten-(1) sind Beispiele für derartige alpha-Olefine.

Die Molekulargewichte der Polymerisate lassen sich in bekannter Weise durch Molekulargewichtsregler, vorzugsweise Wasserstoff, einstellen.

Das erfindungsgemäße Verfahren erlaubt es, die Kornstruktur, d.h. Korngröße und Kornverteilung der Polymerisate durch Variation der Bedingungen unter denen die Reduktion der Ti(IV)-Verbindung im Homogenisator erfolgt, zu beeinflussen. Maßgebliche Variable sind u.a. die Konzentrationen der Ausgangslösungen, die Verweilzeit des Reaktionsproduktes im Reaktor sowie die im Homogenisator vorherrschenden Bedingungen. Im Falle eines Kreiselhomogenisators sind das z.B. die Umdrehungszahl und die Gestaltung von Rotor und Stator.

In den folgenden Beispielen wird die Erfindung näher erläutert. Es ist selbstverständlich nicht beabsichtigt, sie auf die hier beschriebenen speziellen Ausführungsformen zu beschränken.

## Katalysatorherstellung

Die Herstellung der Titankomponente des Polymerisationskatalysators erfolgt kontinuierlich unter den in der Tabelle aufgeführten Bedingungen durch Reduktion von $TiCl_4$ mit Isoprenylaluminium oder einer Mischung aus Isoprenylaluminium und Triethylaluminium in einem Kreiselhomogenisator. Hierzu werden die in Benzin gelösten Ausgangssubstanzen über getrennte Zuleitungen und mit bestimmter Geschwindigkeit in den Homogenisator gepumpt. Die resultierende $TiCl_3$-Dispersion wird aufgefangen und ohne Zwischenbehandlung zur Polymerisation eingesetzt.

## Polymerisation

In einem auf 70°C vorgeheizten 3 l-Stahlautoklaven werden unter Schutzgasatmosphäre 2 l Benzin vorgelegt. Man fügt 0,1 mmol Titankomponente, deren Herstellung vorstehend beschrieben wurde, sowie 4 mmol Isoprenylaluminium hinzu, rührt 5 min bei 70°C und speist bei 75°C, unter Rühren und Aufrechterhaltung eines Druckes von 0,4 MPa Ethylen ein. Die Ethylenzufuhr wird nach 2 h beendet. Das entstandene Polyethylen wird vom Dispergiermittel abfiltriert und getrocknet.

## Beispiele 1 bis 4

Die Beispiele 1 bis 4 beschreiben den Einfluß der Konzentration der Ausgangslösungen bei der Herstellung der Titankomponente auf die Kornstruktur des mit ihr hergestellten Polymerisats. Steigende Ti- und Al-Konzentrationen führen zu einer Erhöhung der Schüttdichte und zu einer feineren Korngrößenverteilung.

## Beispiele 1, 5 und 6

Durch Verminderung der Verweilzeit der Titankomponente im Reaktor wird die Katalysatoraktivität verbessert, die Schüttdichte des Polymerisats nimmt ab, die Kornverteilung wird gröber.

## Beispiele 1 und 7 sowie 8 bis 10

Es wird der Einfluß der Rotorgeschwindigkeit bei der Herstellung der Titankompnente aus Ausgangslösungen unterschiedlicher Konzentration gezeigt. Mit steigender Umdrehungszahl je Zeiteinheit steigt die Schüttdichte des Polymerisats an und sein Kornspektrum wird verbreitert.

4

Beispiele 11 bis 13

Die Herstellung der Ti(III)-Komponente unter Kühlung bewirkt bei hoher Katalysatoraktivität eine Steigerung der Schüttdichte des Polymerisats.

Beispiele 14 bis 16

Wie in den Beispielen 1 bis 4 wird der Einfluß der Konzentration der Ausgangslösung bei der Herstellung der Ti(III)-Komponente auf die Katalysatoreigenschaften untersucht; zusätzlich erfolgt die Umsetzung unter Kühlung. Man erzielt dadurch eine weitere Steigerung der Schüttdichte des Polymerisats.

In der folgenden Tabelle haben die Ziffern 1 bis 6 unter den Überschrift "Siebverteilung" folgende Bedeutung:

1 > 1000 $\mu$m

2 > 500 $\mu$m

3 > 250 $\mu$m

4 > 125 $\mu$m

5 > 63 $\mu$m

6 < 63 $\mu$m

Beispiel 17 (Vergleich)

In einem 2 l-Kolben wird unter Schutzgasatmosphäre eine Lösung von 450 mmol Isoprenylaluminium und 50 mmol Triethylaluminium in 0,6 l Benzin auf 0°C gekühlt. Unter Rühren dosiert man bei 0°C 1 mol $TiCl_4$ zu und erwärmt anschließend auf Raumtemperatur. Die entstandene Titankomponente wird wie oben beschrieben aktiviert und zur Polymerisation eingesetzt. Die Aktivität des resultierenden Katalysators beträgt nur etwa ein Fünftel der Aktivität von nach dem erfindungsgemäßen Verfahren hergestellten Katalysatoren.

Tabelle

| Beispiel | Herstellung der Titankomponente | | | | | | Polymerisat | | | | | | | | |
|---|---|---|---|---|---|---|---|---|---|---|---|---|---|---|---|
| | Ti | IPRA | TEA | Upm | Durch-fluß | Temp. | Ausbeute | | Schütt-dichte | Siebverteilung | | | | | |
| | mmol/l | mmol/l | mmol/l | | l/min | °C | g | mmolTi/kg PE | g/l | 1 | 2 | 3 | 4 | 5 | 6 |
| 1 | 100 | 45 | 5 | 5000 | 0,5 | RT | 290 | 0,34 | 130 | Sp | - | 20 | 67 | 12 | Sp |
| 2 | 250 | 112,5 | 12,5 | 5000 | 0,5 | RT | 420 | 0,23 | 190 | Sp | - | 28 | 62 | 8 | 1 |
| 3 | 500 | 225 | 25 | 5000 | 0,5 | RT | 450 | 0,22 | 245 | Sp | Sp | 4 | 55 | 40 | 1 |
| 4 | 1000 | 450 | 50 | 5000 | 0,5 | RT | 335 | 0,30 | 260 | 1 | 1 | 6 | 53 | 38 | 1 |
| 5 | 100 | 45 | 5 | 5000 | 0,2 | RT | 370 | 0,27 | 185 | Sp | Sp | 15 | 63 | 22 | Sp |
| 1 | 100 | 45 | 5 | 5000 | 0,5 | RT | 290 | 0,34 | 130 | Sp | 1 | 20 | 67 | 12 | Sp |
| 6 | 100 | 45 | 5 | 5000 | 1,0 | RT | 170 | 0,59 | 95 | - | 3,5 | 25 | 61 | 10 | Sp |
| 1 | 100 | 45 | 5 | 5000 | 0,5 | RT | 290 | 0,34 | 130 | Sp | - | 20 | 67 | 12 | Sp |
| 7 | 100 | 45 | 5 | 7500 | 0,5 | RT | 350 | 0,30 | 165 | Sp | 1 | 5 | 50 | 38 | 2 |
| 8 | 500 | 225 | 25 | 10000 | 0,5 | RT | 565 | 0,18 | 240 | Sp | Sp | 10 | 73 | 15 | 2 |
| 9 | 500 | 225 | 25 | 5000 | 0,5 | RT | 450 | 0,22 | 245 | Sp | Sp | 4 | 55 | 40 | 1 |
| 10 | 500 | 225 | 25 | 16000 | 0,5 | RT | 300 | 0,33 | 235 | 2 | 2 | 3 | 47 | 45 | 1 |
| 11 | 1000 | 500 | - | 10000 | 0,2 | 0 | 450 | 0,22 | 275 | 0,5 | - | 28 | 65 | 5,5 | Sp |
| 12 | 1000 | 500 | - | 10000 | 0,2 | -20 | 410 | 0,24 | 285 | Sp | - | 54 | 40 | 4 | 1 |
| 13 | 1000 | 500 | - | 10000 | 0,2 | -35 | 450 | 0,22 | 295 | Sp | 2 | 66 | 25 | 5 | 2 |
| 14 | 500 | 250 | - | 10000 | 0,2 | -30 | 445 | 0,22 | 250 | 1 | 1 | 29 | 67 | 2 | Sp |
| 15 | 1000 | 500 | - | 10000 | 0,2 | -30 | 440 | 0,23 | 275 | 1 | 1 | 24 | 72 | 3 | Sp |
| 16 | 1500 | 750 | - | 10000 | 0,2 | -30 | 335 | 0,30 | 310 | Sp | 1 | 6 | 78 | 20 | Sp |
| Vergleichs-beispiel 17: | - | - | - | - | - | - | 70 | 1,4 | 308 | 1 | 1 | 6 | 40 | 47,5 | 4,5 |

**Patentansprüche**

1. Verfahren zur kontinuierlichen Herstellung von Katalysatoren aus einer Ti(III)-Verbindung und einer organischen Aluminiumverbindung für die Niederdruckpolymerisation von alpha-Olefinen, dadurch gekennzeichnet, daß man eine Ti(III)-Verbindung verwendet, die durch Reduktion einer Ti(IV)-Verbindung mit einer organischen Aluminiumverbindung in einem Homogenisator erhalten wurde.

2. Verfahren nach Anspruch 1, dadurch gekennzeichnet, daß man als Homogenisator einen Kreiselhomogenisator verwendet.

3. Verfahren nach Anspruch 1 oder 2, dadurch gekennzeichnet, daß die Umsetzung der Ti(IV)-Verbindung mit der organischen Aluminiumverbindung bei Temperaturen von -20 bis 50 °C, vorzugsweise 0 bis 20 °C, erfolgt.

4. Verfahren nach einem oder mehreren der Ansprüche 1 bis 3, dadurch gekennzeichnet, daß die Konzentration der Ti(IV)-Verbindung bzw. der organischen Aluminiumverbindung in den Ausgangslösungen 50 bis 3000, insbesondere 100 bis 1500 mmol/l beträgt.

5. Verfahren nach einem oder mehreren der Ansprüche 1 bis 4, dadurch gekennzeichnet, daß je mol Titanverbindung 0,3 bis 2,0, vorzugsweise 0,4 bis 1,0 mol organische Aluminiumverbindung eingesetzt werden.

6. Verfahren nach einem oder mehreren der Ansprüche 1 bis 5, dadurch gekennzeichnet, daß als Ti(IV)-Verbindung $TiCl_4$, $TiBr_4$ oder Verbindungen der allgemeinen Formel $Ti(OR)_{4-n}X_n$ eingesetzt werden, wobei n 1 bis 3 ist, R gleiche oder verschiedene Kohlenwasserstoffreste, insbesondere Alkylreste mit 1 bis 18, vorzugsweise 2 bis 8 Kohlenstoffatomen und X Chlor oder Brom bedeuten.

7. Verfahren nach einem oder mehreren der Ansprüche 1 bis 6, dadurch gekennzeichnet, daß als organische Aluminiumverbindungen Verbindungen der allgemeinen Formel $AlR_{3-n}X_n$, wobei n 0, 1 oder 2 ist, R für gleiche oder verschiedene Alkylreste mit 1 bis 12, insbesondere 2 bis 6 Kohlenstoffatomen steht und X Chlor oder Brom bedeutet, oder polymere Aluminiumorganyle eingesetzt werden.

8. Verfahren nach Anspruch 7, dadurch gekennzeichnet, daß als polymere Aluminiumorganyle die Umsetzungsprodukte von $Al(i-C_4H_9)_3$ oder $Al(i-C_4H_9)_2H$ mit Isopren eingesetzt werden.

9. Verwendung der Katalysatoren nach einem oder mehreren der Ansprüche 1 bis 8 zur Polymerisation von Ethylen oder Mischungen aus Ethylen und bis zu 10 Gew.-% eines alpha-Olefins mit 3 bis 16 Kohlenstoffatomen in Lösung, Suspension oder in der Gasphase bei Temperaturen von 20 bis 250 °C und Drücken von 0,15 bis 2,0 MPa.

**Claims**

1. A process for the continuous preparation of catalysts consisting of a Ti(III) compound and an organic aluminium compound for low-pressure polymerisation of alpha-olefins, characterised in that a Ti(III) compound is used which is obtained by the reduction of a Ti(IV) compound with an organic aluminium compound in a homogenizer.

2. A process according to claim 1, characterised in that a centrifugal homogenizer is used as a homogenizer.

3. A process according to claim 1 or 2, characterised in that the reaction of the Ti(IV) compound with the organic aluminium compound takes place at temperatures of -20 to 50 °C, preferably 0 to 20 °C.

4. A process according to one or more of the claims 1 to 3, characterised in that the concentration of the Ti(IV) compound and the organic aluminium compound in the starting solutions is 50 to 3000, in particular 100 to 1500 mmoles/litre.

5. A process according to one or more of the claims 1 to 4, characterised in that 0.3 to 2.0, preferably 0.4 to 1.0 moles of organic aluminium compound are used per mole of titanium compound.

6. A process according to one or more of the claims 1 to 5, characterised in that the Ti(IV) compound is $TiCl_4$, $TiBr_4$ or compounds with the general formula $Ti(OR)_{4-n}X_n$, n being 1 to 3, R being the same or different hydrocarbon groups, in particular alkyl groups with 1 to 18, preferably 2 to 8 carbon atoms and X denoting chlorine or bromium.

7. A process according to one or more of the claims 1 to 6, characterised in that the organic aluminium compounds are polymeric aluminium organyls or compounds of the general formula $AlR_{3-n}X_n$, n being 0, 1 or 2, R standing for the same or different alkyl groups with 1 to 12, in particular 2 to 6 carbon atoms and X denoting chlorine or bromium.

8. A process according to claim 7, characterised in that the reaction products of $Al(i-C_4H_9)_3$ or $Al(i-C_4H_9)_2H$ with isoprene are used as polymeric aluminium organyls.

9. The use of the catalysts according to one or more of the claims 1 to 8 for polymerising ethylene or mixtures of ethylene and up to 10 % by weight of an alpha-olefin with 3 to 16 carbon atoms in solution, suspension or in the gaseous phase at temperatures of 20 to 250 °C and pressures of 0.15 to 2.0 MPa.

**Revendications**

1. Procédé pour la préparation continue de catalyseurs de la polymérisation des $\alpha$-oléfines à basse pression à partir d'un composé de Ti-III et d'un composé organique de l'aluminium, caractérisé en ce que l'on utilise un composé de Ti-III qui a été obtenu par réduction d'un composé de Ti-IV à l'aide d'un composé organique de l'aluminium dans un homogénéiseur.

2. Procédé selon revendication 1, caractérisé en ce que l'homogénéiseur utilisé est un homogénéiseur rotatif.

3. Procédé selon revendication 1 ou 2, caractérisé en ce que la réaction du composé de Ti-IV avec le composé organique de l'aluminium est effectuée à des températures de -20 à 50 °C, de préférence de 0 à 20 °C.

4. Procédé selon une ou plusieurs des revendications 1 à 3, caractérisé en ce que la concentration du composé de Ti-IV et du composé organique de l'aluminium dans les solutions de départ est de 50 à 3 000, plus spécialement de 100 à 1500 mmol/l.

5. Procédé selon une ou plusieurs des revendications 1 à 4, caractérisé en ce que, pour 1 mol de composé du titane, on utilise de 0,3 à 2,0, de préférence de 0,4 à 1,0 mol de composé organique de l'aluminium.

6. Procédé selon une ou plusieurs des revendications 1 à 5, caractérisé en ce que l'on utilise en tant que composé de Ti-IV $TiCl_4$, $TiBr_4$ ou un composé de formule générale $Ti(OR)_{4-n}X_n$ dans laquelle n est un nombre de 1 à 3, R représente des groupes hydrocarbonés identiques ou différents, en particulier des groupes alkyle en $C_1$-$C_{18}$, de préférence en $C_2$-$C_8$ et X représente le chlore ou le brome.

7. Procédé selon une ou plusieurs des revendications 1 à 6, caractérisé en ce que l'on utilise en tant que composés organiques de l'aluminium des composés de formule générale $AlR_{3-n}X_n$ dans laquelle n est égal à 0, 1 ou 2, R représente des groupes alkyle identiques ou différents en $C_1$-$C_{12}$, plus spécialement en $C_2$-$C_6$ et X représente le chlore ou le brome, ou des organyl-aluminiums polymères.

8. Procédé selon revendication 7, caractérisé en ce que l'on utilise en tant qu'organyl-aluminiums polymères, les produits de réaction d'$Al(i-C_4H_9)_3$ ou d'$Al(i-C_4H_9)_2H$ avec l'isoprène.

9. Utilisation des catalyseurs selon une ou plusieurs des revendications 1 à 8 pour la polymérisation de l'éthylène ou de mélanges d'éthylène et de proportions allant jusqu'à 10 % en poids d'une $\alpha$-oléfine en $C_3$-$C_{16}$, en solution, en suspension ou en phase gazeuse, à des températures de 20 à 250 °C et des pressions de 0,15 à 2,0 MPa.